# EUROPEAN PATENT SPECIFICATION

(11) **EP 3 640 306 B1**
(45) Date of publication and mention of the grant of the patent: **14.02.2024**
(21) Application number: 18816571.6
(22) Date of filing: 22.03.2018
(51) Int. Cl.: C09D 11/328, B41J 2/01, B41M 5/00, D06P 5/30, D06P 1/382, D06P 1/384, D06P 1/649, D06P 1/651

(54) **INK FOR INKJET TEXTILE PRINTING AND INKJET TEXTILE PRINTING METHOD**
TINTE FÜR TINTENSTRAHLBEDRUCKUNG VON TEXTILIEN UND VERFAHREN ZUR TINTENSTRAHLBEDRUCKUNG VON TEXTILIEN
ENCRE D'IMPRESSION SUR TEXTILE PAR JET D'ENCRE, ET PROCÉDÉ D'IMPRESSION SUR TEXTILE PAR JET D'ENCRE

(30) Priority: 16.06.2017 JP 2017119032
(43) Date of publication of application: 22.04.2020
(73) Proprietor: Konica Minolta, Inc., Tokyo 100-7015 (JP)
(72) Inventor: NAKAMURA, Masaki, Tokyo 100-7015 (JP); NITO, Ken, Tokyo 100-7015 (JP); KAWASHIMA, Kouki, Tokyo 100-7015 (JP)
(74) Representative: MFG Patentanwälte Meyer-Wildhagen Meggle-Freund Gerhard PartG mbB
(86) International application number: PCT/JP2018/011469
(87) International publication number: WO 2018/230076

(56) References cited:
- WO-A1-98/29513
- WO-A1-2017/057290
- JP-A- H1 046 039
- JP-A- 2001 507 392
- JP-A- 2007 246 565
- JP-A- 2007 246 565
- JP-A- 2008 517 128
- JP-A- 2012 144 637
- JP-A- 2013 194 344
- JP-A- 2013 535 550
- JP-A- 2013 538 254
- JP-A- 2016 124 213
- JP-A- 2017 043 739
- JP-A- 2017 071 683
- US-A1- 2015 035 894
- US-B1- 6 336 721

## Description

### Technical Field

The present invention relates to an ink for inkjet textile printing and an inkjet textile printing method, and more specifically to an ink for inkjet textile printing and an inkjet textile printing method, stabilizing an emission speed and an emission direction from an inkjet recording device even when the ink contains a dye at a high concentration, capable of preventing landing deviation, and capable of drawing a straight line clearly and improving image sharpness particularly when textile printing is performed by a single pass method.

### Background Art

Conventionally, screen textile printing and roller textile printing using a plate have been performed. However, these textile printings have a low production efficiency because it is necessary to prepare a plate in advance. In recent years, since it is not necessary to prepare a plate and a production efficiency is high, so-called inkjet textile printing has been performed in which an image is formed on a recording medium such as a fabric by an inkjet method.

Patent Literature 1 discloses use of an ink containing an organic buffer and 2-imidazolidinone (hereinafter also referred to as ethylene urea) in addition to a reactive dye and urea in order to obtain a sufficient printing density in inkjet textile printing. US6336721B1, WO98/29513A1 and JP2001507392A disclose an ink for ink-jet printing on cotton comprising 50:50 isomer dye, water and diethylene glycol. JP2007246565A discloses an ink suitable for ink jet printing on textiles, comprises glycerin, urea, water and a mixture of isomeric dyes.

### Citation List

### Patent Literature

Patent Literature 1: JP 2010-116566 A

### Summary of Invention

### Technical Problem

Patent Literature 1 describes that ethylene urea improves solubility of a reactive dye. However, particularly when an ink contains a dye at a high concentration, an emission speed and an emission direction from an inkjet recording device are unstable, and landing deviation cannot be prevented. Particularly when textile printing is performed by a single pass method, it is difficult to draw a straight line clearly and to improve image sharpness. The technique of Patent Literature 1 does not solve these problems.

Therefore, an object of the present invention is to provide an ink for inkjet textile printing and an inkjet textile printing method, stabilizing an emission speed and an emission direction from an inkjet recording device even when the ink contains a dye at a high concentration, capable of preventing landing deviation, and capable of drawing a straight line clearly and improving image sharpness particularly when textile printing is performed by a single pass method.

Other objects of the present invention will become apparent from the following description.

### Solution to Problem

The above problems are solved by the following inventions.
1.
   Therefore, an object of the present invention is to provide an ink for inkjet textile printing and an inkjet textile printing method, stabilizing an emission speed and an emission direction from an inkjet recording device even when the ink contains a dye at a high concentration, capable of preventing landing deviation, and capable of drawing a straight line clearly and improving image sharpness particularly when textile printing is performed by a single pass method.

Other objects of the present invention will become apparent from the following description.

### Solution to Problem

The above problems are solved by an ink for inkjet textile printing as defined in appended claim 1 and an inkjet textile printing method as defined in appended claim 4.

### Advantageous Effects of Invention

The present invention can provide an ink for inkjet textile printing and an inkjet textile printing method, stabilizing an emission speed and an emission direction from an inkjet recording device even when the ink contains a dye at a high concentration, capable of preventing landing deviation, and capable of drawing a straight line clearly and improving image sharpness particularly when textile printing is performed by a single pass method.

### Description of Embodiments

Hereinafter, an embodiment for carrying out the present invention will be described in detail.

### 1. Ink for inkjet textile printing

An ink for inkjet textile printing (hereinafter also simply referred to as an ink) of the present invention contains at least water, an alkylene glycol, dye A, and dye B, in which the dye A and the dye B are in an isomer relationship, the dye B is more hydrophobic than the dye A, and a content molar ratio between the dye A and the dye B (dye A/dye B) is from 40/60 to 80/20.

As a result, an emission speed and an emission direction from an inkjet recording device are stable even when the ink contains a dye at a high concentration, and landing deviation can be prevented. Particularly when textile printing is performed by a single pass method, a straight line can be drawn clearly, and image sharpness can be improved.

A reason why such an effect is exhibited is estimated to be as follows.

First, an inkjet emits an ink by propagating a vibration force generated by driving an inkjet head to a liquid. Therefore, a bonding property between molecules (water or an alkylene glycol) constituting the liquid in the ink is important, and a hydrogen bond largely contributes to the bond.

Meanwhile, the dye has a strong intermolecular interaction due to a π-π bond of an aromatic ring. Therefore, particularly when the ink contains the dye at a high concentration, molecules of the dyes form an association state. The dye in an association state disturbs a hydrogen bond between molecules constituting the liquid in the ink. Therefore, propagation of the force is disturbed, and an emission property (emission speed and emission direction) is disturbed.

In contrast, in the ink of the present invention, dye B that is more hydrophobic than dye A is adsorbed on an inner side, dye A is adsorbed on an outer side, and the dyes are stabilized like a micelle (hereinafter also referred to as a dye micelle) even if the ink contains the dyes at a high concentration. Therefore, the number of molecules that inhibit propagation of the force is reduced, and formation of the above-described association state is also inhibited. As a result, a hydrogen bond transmission mechanism for propagating the vibration force of a head is formed satisfactorily, an emission property is stabilized, and the above-described effects are exhibited.

Hereinafter, each component of the ink for inkjet textile printing will be further described in detail.

### (Dye)

The isomer relationship between dye A and dye B contained in the ink is not particularly limited, and examples thereof include an isomer relationship (positional isomer) in which there is a difference in substitution position of a substituent bonded to an aromatic ring of the dye. Here, the substituent is not particularly limited, but examples thereof include a hydrophilic group. Examples of the hydrophilic group include a sulfonic acid group and a hydroxy group. The sulfonic acid group is a group represented by -SO₃H or -SO₃M (M represents a monovalent metal atom).

Since dye A and dye B that are in an isomer relationship can exhibit UV-Vis waveforms similar to each other, it is difficult to obtain a color mixing effect due to combined use of dye A and dye B. In the present invention, dye A and dye B are used in combination not for the purpose of color mixing but for the purpose of stabilizing an emission property. Since the structures of dye A and dye B are similar to each other due to the isomer relationship between dye A and dye B, an interaction that contributes to stabilizing a dye micelle is easily obtained.

Hydrophobicity can be compared between dye A and dye B using reverse phase high performance liquid chromatography (HPLC). In reverse phase HPLC, when dye B has a longer retention time than dye A, dye B is more hydrophobic than dye A.

Since dye B is more hydrophobic than dye A, in a solvent containing at least water and an alkylene glycol, dye B having a relatively low affinity with the solvent is adsorbed on an inner side, and dye A having a relatively high affinity with the solvent is adsorbed on an outer side to stabilize a dye micelle.

Each of dye A and dye B preferably has a molecular weight of 750 or more. When the molecular weight of the dye becomes a large value of 750 or more, an influence of an association state on an emission property is large. However, the present invention can suppress formation of the association state, and can form a stable dye micelle. Therefore, the effect of the present invention can be exhibited more suitably. An upper limit of the molecular weight is not particularly limited, but can be, for example, 3000 or less, 2000 or less, 1500 or less, or 1200 or less.

In the ink, the content molar ratio between dye A and dye B (dye A/dye B) is from 55/45 to 70/30. When the molar ratio of dye A is more than 80 (molar ratio of dye B is less than 20), a large number of dye micelles having small diameters are formed, resulting in a steric hindrance to a hydrogen bond transmission mechanism. Meanwhile, when the molar ratio of dye A is less than 40 (molar ratio of dye B is more than 60), a dye micelle having a large diameter is formed, resulting in a steric hindrance to the hydrogen bond transmission mechanism. Since the content molar ratio between dye A and dye B (dye A/dye B) is from 55/45 to 70/30, a balance between the number of dye micelles and sizes thereof is suitable for formation of the hydrogen bond transmission mechanism, and an emission property is stabilized.

The effect of the present invention is exhibited satisfactorily even when the ink contains the dye at a high concentration. Even if the sum of the contents of dye A and dye B in the ink is a high concentration reaching 11wt% to 30wt%, the effect of the present invention is exhibited satisfactorily.

Examples of the combination of dye A and dye B are illustrated below, but the combination of dye A and dye B is not limited by these combinations. Among the dyes exemplified below, dye A-1, dye B-1, dye A-2, dye B-2, dye A-3, dye B-3, dye A-4, and dye B-4 each have a molecular weight of 750 or more, and dye A-5 and dye B-5 each have a molecular weight of less than 750.

### <Combination Example 1>

### Dye A-1:

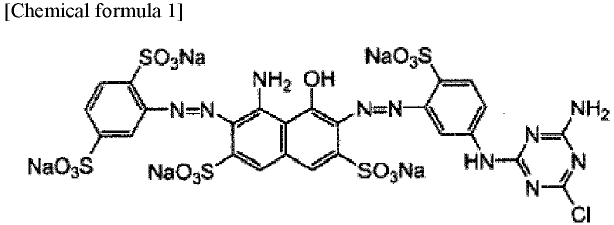

### Dye B-1:

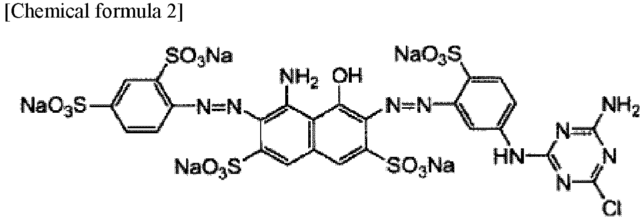

### <Combination Example 2>

### Dye A-2:

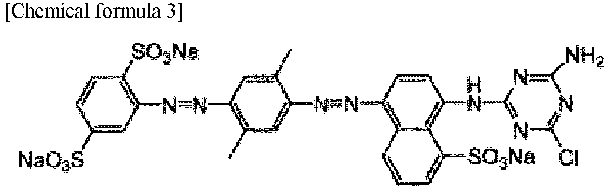

### Dye B-2:

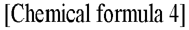

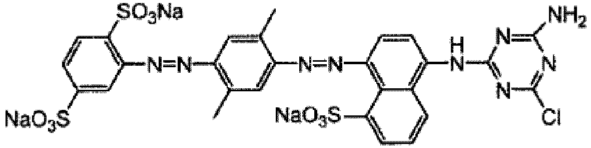

### <Combination Example 3>

### Dye A-3:

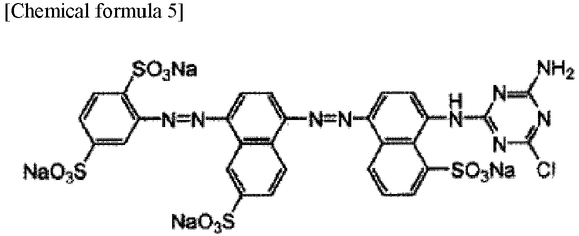

### Dye B-3:

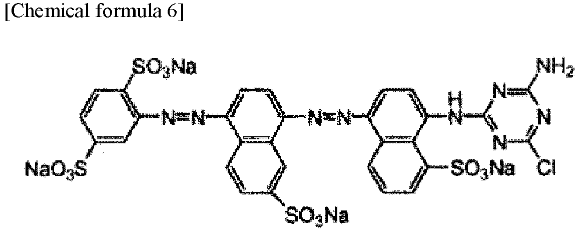

### <Combination Example 4>

### Dye A-4:

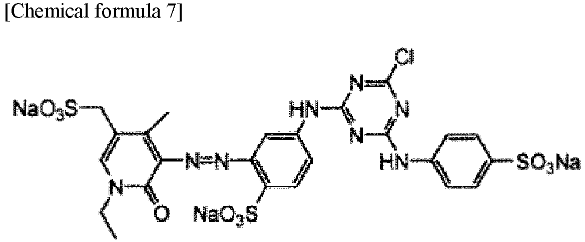

### Dye B-4:

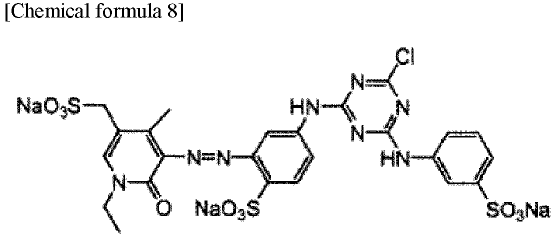

### <Combination Example 5>

### Dye A-5:

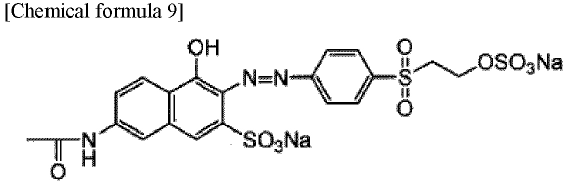

### Dye B-5:

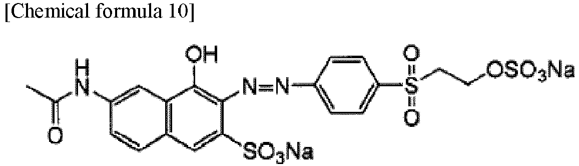

Each of the dyes exemplified above can be obtained as a commercially available product or by a synthesis method known per se.

In addition to dye A and dye B, the ink may contain another dye as long as the effect of the present invention is not impaired.

### (Solvent)

The alkylene glycol contained in the ink constitutes an ink solvent together with water. The alkylene glycol has an excellent hydrogen bonding property due to a hydroxy group in a molecule thereof, and therefore contributes to formation of a hydrogen bond transmission mechanism together with water. The alkylene glycol prevents ink drying in a nozzle of an inkjet head because of having a higher boiling point than water, and also contributes to stabilization of an emission property.

Examples of the alkylene glycol include a compound having an alkylene group having 2 to 20 carbon atoms and two hydroxy groups. Specific examples thereof include ethylene glycol, diethylene glycol, triethylene glycol, polyethylene glycol, propylene glycol, dipropylene glycol, polypropylene glycol, butylene glycol, hexanediol, pentanediol, and thiodiglycol. The alkylene glycol may be used singly or in combination of two or more types thereof.

In the ink, the content of the alkylene glycol is not particularly limited, but can be, for example, from 10wt% to 40wt%.

The ink contains a solvent having a urea bond. Examples of the solvent having a urea bond include urea, thiourea, an alkyl-substituted urea, and an alkyl thiourea. More specific examples thereof include urea, ethylene urea, dimethyl urea, monomethyl thiourea, thiourea, and dimethyl thiourea. Among these compounds, ethylene urea is particularly preferable. The solvent having a urea bond may be used singly or in combination of two or more types thereof.

Since the ink contains a solvent having a urea bond, the effect of the present invention is exhibited more satisfactorily. A reason for this is estimated to be that a solvent having a urea bond, particularly ethylene urea contributes to formation of a hydrogen bond transmission mechanism because of having a hydrogen bonding property itself, and interacts with the dye to stabilize a dye micelle.

In the ink, the content of the solvent having a urea bond is not particularly limited, but can be, for example, from 2wt% to 20wt%.

The ink may further contain a solvent other than the solvent described above. Examples of the other solvent include a monohydric alcohol, a poly hydric alcohol other than an alkylene glycol, an amine, an amide, and a heterocyclic ring.

Examples of the monohydric alcohol include methanol, ethanol, propanol, isopropanol, butanol, isobutanol, sec-butanol, and t-butanol.

Examples of the polyhydric alcohol other than an alkylene glycol include glycerin, hexanetriol, and thiodiglycol.

Examples of the amine include ethanolamine, diethanolamine, triethanolamine, N-methyldiethanolamine, N-ethyldiethanolamine, morpholine, N-ethylmorpholine, ethylenediamine, diethylenediamine, triethylenetetramine, tetraethylenepentamine, polyethyleneimine, pentamethyldiethylenetriamine, and tetramethylpropylenediamine.

Examples of the amide include formamide, N,N-dimethylformamide, and N,N-dimethylacetamide.

Examples of the heterocyclic ring include 2-pyrrolidone, N-methyl-2-pyrrolidone, cyclohexyl pyrrolidone, 2-oxazolidone, and 1,3-dimethyl-2-imidazolidinone.

### (Other components)

The ink may further contain another component (additive) such as a pH adjuster, a surfactant, an antiseptic, or an antifungal agent.

Examples of the pH adjuster include citric acid, sodium citrate, and sodium hydroxide.

Examples of the surfactant include a dialkyl sulfosuccinate, an alkylnaphthalene sulfonate, a polyoxyethylene alkyl ether, a polyoxyethylene alkyl allyl ether, an acetylene glycol, a polyoxyethylene-polyoxypropylene block copolymer, an alkylamine salt, a quaternary ammonium salt, a silicone-based surfactant, and a fluorine-based surfactant. Among these compounds, an acetylene glycol can be preferably used because of having a relatively low foaming property and being able to adjust a surface tension of the ink.

Examples of the antiseptic and the antifungal agent include an aromatic halogen compound (for example, Preventol CMK), methylene dithiocyanate, a halogen-containing nitrogen sulfur compound, and 1,2-benzisothiazolin-3-one (for example, PROXEL GXL).

### (Physical properties of ink)

The pH of the ink is not particularly limited, and can be from 7 to 9, for example. The pH of the ink can be measured at 25°C using an HM-20S model manufactured by DKK-TOA Corporation.

The viscosity of the ink is not particularly limited, and can be, for example, from 1 mPa s to 40 mPa s. The viscosity of the ink is a value measured at 25°C.

The surface tension of the ink is not particularly limited, and can be, for example, from 30 mN/m to 60 mN/m. The surface tension of the ink is a value measured at 25°C.

### 2. Inkjet textile printing method

In the inkjet textile printing method of the present invention, the ink described above is emitted from an inkjet head for textile printing.

As a result, an emission speed and an emission direction from an inkjet recording device are stable even when the ink contains a dye at a high concentration, and landing deviation can be prevented. Particularly when textile printing is performed by a single pass method, a straight line can be drawn clearly, and image sharpness can be improved.

In the inkjet textile printing method, textile printing can be performed by emitting the ink as droplets, using a printer including an inkjet head loaded with the ink, from a nozzle of the inkjet head on the basis of a digital signal, and landing the ink on a recording medium.

The inkjet head may be either an on-demand type or a continuous type. As an inkjet head droplet discharge method, any method such as an electro-mechanical conversion method (for example, single cavity type, double cavity type, bender type, piston type, shear mode type, or sheared wall type) or an electro-thermal conversion method (for example, a thermal inkjet type or a bubble jet (registered trademark) type) may be used. Particularly, an inkjet head using a piezoelectric element as an electro-mechanical conversion element used in the electro-mechanical conversion method (also referred to as a piezo-type inkjet head) is suitable.

There are two types of inkjet printer printing methods called a scanning method (also called a multi pass method) and a single pass method.

For example, the scanning method reciprocates a head carriage in a lateral direction (main scanning direction) with respect to a recording medium conveyance direction (sub-scanning direction), and completes an image by a plurality of passes. The scanning method can reduce the number of heads used although having a slow recording speed.

Meanwhile, for example, the single pass method completes an image by a single pass on a recording medium being conveyed while a line head type inkjet head (head carriage) is fixed. The single pass method makes high-speed recording possible and obtains high productivity.

In the inkjet method, in order to prevent generation of deposits due to ink drying in a nozzle (ink emission nozzle) of an inkjet head, a maintenance operation of discharging ink from the nozzle can be performed. This operation is usually performed in a state where the inkjet head has been moved out of an area on a recording medium (that is, a state where ink is not applied to the recording medium). In the scanning method, the inkjet head can be easily moved out of the area on the recording medium by causing the inkjet head to perform scanning. Meanwhile, in the single pass method, since the inkjet head is usually fixed, it is relatively difficult to move the inkjet head out of the area on the recording medium.

For this reason, in the conventional technology, particularly when textile printing is performed by the single pass method, deposits are generated in a nozzle, and it is difficult to draw a straight line clearly and to improve image sharpness.

In contrast, in the inkjet textile printing method of the present invention, use of the above-described ink makes it possible not only to stabilize an emission property but also to draw a straight line clearly and to improve image sharpness particularly when textile printing is performed by the single pass method. A reason for this is estimated to be that the ink of the present invention prevents generation of deposits in a nozzle by inhibiting formation of an association state of the dye.

When the single pass method is used, a line head type inkjet head can be used as described above. The line head type inkjet head refers to an inkjet head having a length equal to or longer than the width of a printing range. As the line head type inkjet head, a single head having a length equal to or longer than the width of the printing range may be used, or a plurality of heads may be combined so as to have a length equal to or longer than the width of the printing range. A plurality of heads may be arranged side by side such that the nozzles are arranged in a staggered manner to increase the resolution of these heads as a whole.

### Examples

Hereinafter, Examples of the present invention will be described, but the present invention is not limited by the Examples.

### (Example 1)

### 1. Ink for inkjet textile printing

The following inks 1-1 to 1-17 were prepared.

### (1) Ink 1-1

Ink 1-1 contains dye A-1 according to Combination Example 1 described above singly without containing dye B-1. The composition is as follows.

### <Composition of ink 1-1>

- Dye A-1: 15wt%
- Alkylene glycol: 25wt% (ethylene glycol 15wt% and propylene glycol 10wt%)
- Ethylene urea: 5wt%
- Surfactant (acetylene glycol; "Surfynol E1010" manufactured by Nissin Chemical Co., Ltd.): 0.1wt%
- Water (deionized water): balance

### (2) Ink 1-2

Ink 1-2 contains dye A-1 and dye B-1 at a content molar ratio (dye A/dye B) = 85/15. The composition is as follows.

### <Composition of ink 1-2>

- Dye A-1: 12.75wt%
- Dye B-1: 2.25wt%
- An alkylene glycol, ethylene urea, a surfactant, and water are similar to those in ink 1-1.

### (3) Ink 1-3

Ink 1-3 contains dye A-1 and dye B-1 at a content molar ratio (dye A/dye B) = 80/20. The composition is as follows.

### <Composition of ink 1-3>

- Dye A-1: 12wt%
- Dye B-1: 3wt%
- An alkylene glycol, ethylene urea, a surfactant, and water are similar to those in ink 1-1.

### (4) Ink 1-4

Ink 1-4 contains dye A-1 and dye B-1 at a content molar ratio (dye A/dye B) = 70/30. The composition is as follows.

### <Composition of ink 1-4>

- Dye A-1: 10.5wt%
- Dye B-1: 4.5wt%
- An alkylene glycol, ethylene urea, a surfactant, and water are similar to those in ink 1-1.

### (5) Ink 1-5

Ink 1-5 contains dye A-1 and dye B-1 at a content molar ratio (dye A/dye B) = 60/40. The composition is as follows.

### <Composition of ink 1-5>

- Dye A-1: 9wt%
- Dye B-1: 6wt%
- An alkylene glycol, ethylene urea, a surfactant, and water are similar to those in ink 1-1.

### (6) Ink 1-6

Ink 1-6 contains dye A-1 and dye B-1 at a content molar ratio (dye A/dye B) = 55/45. The composition is as follows.

### <Composition of ink 1-6>

- Dye A-1: 8.25wt%
- dye B-1: 6.75wt%
- An alkylene glycol, ethylene urea, a surfactant, and water are similar to those in ink 1-1.

### (7) Ink 1-7

Ink 1-7 contains dye A-1 and dye B-1 at a content molar ratio (dye A/dye B) = 50/50. The composition is as follows.

### <Composition of ink 1-7>

- Dye A-1: 7.5wt%
- Dye B-1: 7.5wt%
- An alkylene glycol, ethylene urea, a surfactant, and water are similar to those in ink 1-1.

### (8) Ink 1-8

Ink 1-8 contains dye A-1 and dye B-1 at a content molar ratio (dye A/dye B) = 40/60. The composition is as follows.

### <Composition of ink 1-8>

- Dye A-1: 6wt%
- Dye B-1: 9wt%
- An alkylene glycol, ethylene urea, a surfactant, and water are similar to those in ink 1-1.

### (9) Ink 1-9

Ink 1-9 contains dye A-1 and dye B-1 at a content molar ratio (dye A/dye B) = 35/65. The composition is as follows.

### <Composition of ink 1-9>

- Dye A-1: 5.25wt%
- Dye B-1: 9.75wt%
- An alkylene glycol, ethylene urea, a surfactant, and water are similar to those in ink 1-1.

### (10) Ink 1-10

Ink 1-10 contains dye B-1 according to Combination Example 1 described above singly without containing dye A-1. The composition is as follows.

### <Composition of ink 1-10>

- Dye B-1: 15wt%
- An alkylene glycol, ethylene urea, a surfactant, and water are similar to those in ink 1-1.

### (11) Ink 1-11

Ink 1-11 was prepared in a similar manner to ink 1-5 except that ink 1-11 contained 5wt% of urea instead of ethylene urea in ink 1-5.

### (12) Ink 1-12

Ink 1-12 was prepared in a similar manner to ink 1-5 except that ink 1-12 contained 5wt% of 2-pyrrolidone instead of ethylene urea in ink 1-5.

### (13) Ink 1-13

Ink 1-13 was prepared by setting the sum of the contents of dye A and dye B to 8wt% in ink 1-5.

### <Composition of ink 1-13>

- Dye A-1: 4.8wt%
- Dye B-1: 3.2wt%
- An alkylene glycol, ethylene urea, a surfactant, and water are similar to those in ink 1-1. The amount of change in the dye content with respect to ink 1-5 was adjusted by the content of water (balance), and the total ink amount was set to 100wt%.

### (14) Ink 1-14

Ink 1-14 was prepared by setting the sum of the contents of dye A and dye B to 11wt% in ink 1-5.

### <Composition of ink 1-14>

- Dye A-1: 6.6wt%
- Dye B-1: 4.4wt%
- An alkylene glycol, ethylene urea, a surfactant, and water are similar to those in ink 1-1. The amount of change in the dye content with respect to ink 1-5 was adjusted by the content of water (balance), and the total ink amount was set to 100wt%.

### (15) Ink 1-15

Ink 1-15 was prepared by setting the sum of the contents of dye A and dye B to 30wt% in ink 1-5.

### <Composition of ink 1-15>

- Dye A-1: 18wt%
- Dye B-1: 12wt%
- An alkylene glycol, ethylene urea, a surfactant, and water are similar to those in ink 1-1. The amount of change in the dye content with respect to ink 1-5 was adjusted by the content of water (balance), and the total ink amount was set to 100wt%.

### (16) Ink 1-16

Ink 1-16 was prepared by setting the sum of the contents of dye A and dye B to 35wt% in ink 1-5.

### <Composition of ink 1-16>

- Dye A-1: 21wt%
- Dye B-1: 14wt%
- An alkylene glycol, ethylene urea, a surfactant, and water are similar to those in ink 1-1. The amount of change in the dye content with respect to ink 1-5 was adjusted by the content of water (balance), and the total ink amount was set to 100wt%.

### (17) Ink 1-17

Ink 1-17 was prepared by setting the content of ethylene urea to 10wt% in ink 1-14. At this time, a difference due to the change in the content of ethylene urea was adjusted by the content of ethylene glycol such that the total ink amount was 100wt%.

### 2. Inkjet textile printing method

For each of inks 1-1 to 1-17, an image (including a straight line portion) was formed on a cotton fabric using a single pass method inkjet head (droplet amount 20 pl, discharge frequency 10 kHz, nozzle resolution 360 dpi). After the image was formed, the fabric was steamed and washed to fix the dye on the fabric.

### 3. Evaluation method

Linearity of the straight line portion and image sharpness in each of the formed images were evaluated by the following methods.

### (1) Linearity

A straight line portion (length 20 mm) in each of the formed images was observed with an optical microscope. The number of ink droplets that landed on a position deviated from the straight line (landing deviation) was counted, and linearity was evaluated according to the following evaluation criteria.

### [Evaluation criteria]

AA: Less than 1% of ink droplets caused landing deviation
A: 1% or more and less than 5% of ink droplets caused landing deviation
B: 5% or more and less than 10% of ink droplets caused landing deviation
C: 10% or more of ink droplets caused landing deviation

### (2) Image sharpness (sensory test)

Ten subjects visually observed the formed images, and evaluated image sharpness thereof according to the following evaluation criteria. Image sharpness is determined by whether or not the subjects feel that an image is sharp. For example, when sharpness of an edge in an image is impaired by ink splash, the subjects do not feel that the image is sharp.

### [Evaluation criteria]

AA: Nine or more subjects answered that they felt that an image was sharp
A: 7 or 8 subjects answered that they felt that an image was sharp
B: 4 to 6 subjects answered that they felt that an image was sharp
C: Three or fewer subjects answered that they felt that an image was sharp

Table 1 illustrates the above results. In the Table 1, examples 1-1, 1-2, 1-3, 1-7, 1-8, 1-9 and 1-10 are comparative examples (the ratio of dyes is not according to claim 1), example 1-12 is also a comparative example (no urea-based solvent), and examples 1-13 and 1-16 are comparative examples as well (the sum of contents of A+B is not according to claim 1).

**[Table 1]**

| Ink No. | | 1-1 | 1-2 | 1-3 | 1-4 | 1-5 | 1-6 | 1-7 | 1-8 | 1-9 | 1-10 | 1-11 | 1-12 | 1-13 | 1-14 | 1-15 | 1-16 | 1-17 |
|---|---|---|---|---|---|---|---|---|---|---|---|---|---|---|---|---|---|---|
| Content molar ratio | Dye A-1 | 100 | 85 | 80 | 70 | 60 | 55 | 50 | 40 | 35 | 0 | 60 | 60 | 60 | 60 | 60 | 60 | 60 |
| | Dye B-1 | 0 | 15 | 20 | 30 | 40 | 45 | 50 | 60 | 65 | 100 | 40 | 40 | 40 | 40 | 40 | 40 | 40 |
| Sum of contents of dye A and dye B (wt%) | | 15 | 15 | 15 | 15 | 15 | 15 | 15 | 15 | 15 | 15 | 15 | 15 | 8 | 11 | 30 | 35 | 11 |
| Ethylene urea (wt%) | | 5 | 5 | 5 | 5 | 5 | 5 | 5 | 5 | 5 | 5 | - | - | 5 | 5 | 5 | 5 | 10 |
| Urea (wt%) | | - | - | - | - | - | - | - | - | - | - | 5 | - | - | - | - | - | - |
| 2-Pyrrolidone (wt%) | | - | - | - | - | - | - | - | - | - | - | - | 5 | - | - | - | - | - |
| Evaluatio n | Linearity | C | B | A | AA | AA | AA | A | A | C | C | AA | B | A | AA | AA | B | AA |
| | Image sharpnes s | C | C | A | AA | AA | AA | A | A | B | C | A | B | A | AA | AA | A | AA |
| Note | | Comparativ e | Comparativ e | Present inventio n | Present inventio n | Present inventio n | Present inventio n | Present inventio n | Present inventio n | Comparativ e | Comparativ e | Present inventio n | Present inventio n | Present inventio n | Present inventio n | Present inventio n | Present inventio n | Present inventio n |

### (Example 2)

Inks 2-1 to 2-17 were prepared in a similar manner to inks 1-1 to 1-17 except that dye A-2 and dye B-2 according to Combination Example 2 described above were used instead of dye A-1 and dye B-1 and that the contents of the components were set to the values illustrated in Table 2 in inks 1-1 to 1-17 of Example 1. Inks 2-1 to 2-17 were evaluated in a similar manner to Example 1. Table 2 illustrates results thereof. In the Table 2, examples 2-1, 2-2, 2-3, 2-7, 2-8, 2-9 and 2-10 are comparative examples (the ratio of dyes is not according to claim 1), example 2-12 is also a comparative example (no urea-based solvent), and examples 2-13 and 2-16 are comparative examples as well (the sum of contents of A+B is not according to claim 1).

**[Table 2]**

| Ink No. | | 2-1 | 2-2 | 2-3 | 2-4 | 2-5 | 2-6 | 2-7 | 2-8 | 2-9 | 2-10 | 2-11 | 2-12 | 2-13 | 2-14 | 2-15 | 2-16 | 2-17 |
|---|---|---|---|---|---|---|---|---|---|---|---|---|---|---|---|---|---|---|
| Content molar ratio | Dye A-2 | 100 | 85 | 80 | 70 | 60 | 55 | 50 | 40 | 35 | 0 | 60 | 60 | 60 | 60 | 60 | 60 | 60 |
| | Dye B-2 | 0 | 15 | 20 | 30 | 40 | 45 | 50 | 60 | 65 | 100 | 40 | 40 | 40 | 40 | 40 | 40 | 40 |
| Sum of contents of dye A and dye B (wt%) | | 20 | 20 | 20 | 20 | 20 | 20 | 20 | 20 | 20 | 20 | 20 | 20 | 8 | 11 | 30 | 35 | 11 |
| Ethylene urea (wt%) | | 10 | 10 | 10 | 10 | 10 | 10 | 10 | 10 | 10 | 10 | - | - | 10 | 10 | 10 | 10 | 4 |
| Urea (wt%) | | - | - | - | - | - | - | - | - | - | - | 10 | - | - | - | - | - | - |
| 2-Pyrrolidone (wt%) | | - | - | - | - | - | - | - | - | - | - | - | 10 | - | - | - | - | - |
| Evaluatio n | Linearity | C | B | A | AA | AA | AA | A | A | C | C | AA | B | A | AA | AA | B | AA |
| | Image sharpnes s | C | C | A | AA | AA | AA | A | A | B | C | A | B | A | AA | AA | A | AA |
| Note | | Comparativ e | Comparativ e | Present inventio n | Present inventio n | Present inventio n | Present inventio n | Present inventio n | Present inventio n | Comparativ e | Comparativ e | Present inventio n | Present inventio n | Present inventio n | Present inventio n | Present inventio n | Present inventio n | Present inventio n |

### (Example 3)

Inks 3-1 to 3-17 were prepared in a similar manner to inks 1-1 to 1-17 except that dye A-3 and dye B-3 according to Combination Example 3 described above were used instead of dye A-1 and dye B-1 and that the contents of the components were set to the values illustrated in Table 3 in inks 1-1 to 1-17 of Example 1. Inks 3-1 to 3-17 were evaluated in a similar manner to Example 1. Table 3 illustrates results thereof. In the Table 3, examples 3-1, 3-2, 3-3, 3-7, 3-8, 3-9 and 3-10 are comparative examples (the ratio of dyes is not according to claim 1), example 3-12 is also a comparative example (no urea-based solvent), and examples 3-13 and 3-16 are comparative examples as well (the sum of contents of A+B is not according to claim 1).

**[Table 3]**

| Ink No. | | 3-1 | 3-2 | 3-3 | 3-4 | 3-5 | 3-6 | 3-7 | 3-8 | 3-9 | 3-10 | 3-11 | 3-12 | 3-13 | 3-14 | 3-15 | 3-16 | 3-17 |
|---|---|---|---|---|---|---|---|---|---|---|---|---|---|---|---|---|---|---|
| Content molar ratio | Dye A-3 | 100 | 85 | 80 | 70 | 60 | 55 | 50 | 40 | 35 | 0 | 60 | 60 | 60 | 60 | 60 | 60 | 60 |
| | Dye B-3 | 0 | 15 | 20 | 30 | 40 | 45 | 50 | 60 | 65 | 100 | 40 | 40 | 40 | 40 | 40 | 40 | 40 |
| Sum of contents of dye A and dye B (wt%) | | 15 | 15 | 15 | 15 | 15 | 15 | 15 | 15 | 15 | 15 | 15 | 15 | 8 | 11 | 30 | 35 | 11 |
| Ethylene urea (wt%) | | 5 | 5 | 5 | 5 | 5 | 5 | 5 | 5 | 5 | 5 | - | - | 5 | 5 | 5 | 5 | 10 |
| Urea (wt%) | | - | - | - | - | - | - | - | - | - | - | 5 | - | - | - | - | - | - |
| 2-Pyrrolidone (wt%) | | - | - | - | - | - | - | - | - | - | - | - | 5 | - | - | - | - | - |
| Evaluatio n | Linearity | C | B | A | AA | AA | AA | A | A | C | C | AA | B | A | AA | AA | B | AA |
| | Image sharpnes s | C | C | A | AA | AA | AA | A | A | B | C | A | B | A | AA | AA | A | AA |
| Note | | Comparativ e | Comparativ e | Present inventio n | Present inventio n | Present inventio n | Present inventio n | Present inventio n | Present inventio n | Comparativ e | Comparativ e | Present inventio n | Present inventio n | Present inventio n | Present inventio n | Present inventio n | Present inventio n | Present inventio n |

### (Example 4)

Inks 4-1 to 4-17 were prepared in a similar manner to inks 1-1 to 1-17 except that dye A-4 and dye B-4 according to Combination Example 4 described above were used instead of dye A-1 and dye B-1 and that the contents of the components were set to the values illustrated in Table 4 in inks 1-1 to 1-17 of Example 1. Inks 4-1 to 4-17 were evaluated in a similar manner to Example 1. Table 4 illustrates results thereof. In the Table 4, examples 4-1, 4-2, 4-3, 4-7, 4-8, 4-9 and 4-10 are comparative examples (the ratio of dyes is not according to claim 1), example 4-12 is also a comparative example (no urea-based solvent), and examples 4-13 and 4-16 are comparative examples as well (the sum of contents of A+B is not according to claim 1).

**[Table 4]**

| Ink No. | | 4-1 | 4-2 | 4-3 | 4-4 | 4-5 | 4-6 | 4-7 | 4-8 | 4-9 | 4-10 | 4-11 | 4-12 | 4-13 | 4-14 | 4-15 | 4-16 | 4-17 |
|---|---|---|---|---|---|---|---|---|---|---|---|---|---|---|---|---|---|---|
| Content molar ratio | Dye A-4 | 100 | 85 | 80 | 70 | 60 | 55 | 50 | 40 | 35 | 0 | 60 | 60 | 60 | 60 | 60 | 60 | 60 |
| | Dye B-4 | 0 | 15 | 20 | 30 | 40 | 45 | 50 | 60 | 65 | 100 | 40 | 40 | 40 | 40 | 40 | 40 | 40 |
| Sum of contents of dye A and dye B (wt%) | | 18 | 18 | 18 | 18 | 18 | 18 | 18 | 18 | 18 | 18 | 18 | 18 | 8 | 11 | 30 | 35 | 11 |
| Ethylene urea (wt%) | | 4 | 4 | 4 | 4 | 4 | 4 | 4 | 4 | 4 | 4 | - | - | 4 | 4 | 4 | 4 | 10 |
| Urea (wt%) | | - | - | - | - | - | - | - | - | - | - | 4 | - | - | - | - | - | - |
| 2-Pyrrolidone (wt%) | | - | - | - | - | - | - | - | - | - | - | - | 4 | - | - | - | - | - |
| Evaluatio n | Linearity | C | B | A | AA | AA | AA | A | A | C | C | AA | B | A | AA | AA | B | AA |
| | Image sharpnes s | C | C | A | AA | AA | AA | A | A | B | C | A | B | A | AA | AA | A | AA |
| Note | | Comparativ e | Comparativ e | Present inventio n | Present inventio n | Present inventio n | Present inventio n | Present inventio n | Present inventio n | Comparativ e | Comparativ e | Present inventio n | Present inventio n | Present inventio n | Present inventio n | Present inventio n | Present inventio n | Present inventio n |

### (Example 5)

Inks 5-1 to 5-17 were prepared in a similar manner to inks 1-1 to 1-17 except that dye A-5 and dye B-5 according to Combination Example 5 described above were used instead of dye A-1 and dye B-1 and that the contents of the components were set to the values illustrated in Table 5 in inks 1-1 to 1-17 of Example 1. Inks 5-1 to 5-17 were evaluated in a similar manner to Example 1. Table 5 illustrates results In the Table 5, examples 5-1, 5-2, 5-3, 5-7, 5-8, 5-9 and 5-10 are comparative examples (the ratio of dyes is not according to claim 1), example 5-12 is also a comparative example (no urea-based solvent), and examples 5-13 and 5-16 are comparative examples as well (the sum of contents of A+B is not according to claim 1).

**[Table 5]**

| Ink No. | | 5-1 | 5-2 | 5-3 | 5-4 | 5-5 | 5-6 | 5-7 | 5-8 | 5-9 | 5-10 | 5-11 | 5-12 | 5-13 | 5-14 | 5-15 | 5-16 | 5-17 |
|---|---|---|---|---|---|---|---|---|---|---|---|---|---|---|---|---|---|---|
| Content molar ratio | Dye A-5 | 100 | 85 | 80 | 70 | 60 | 55 | 50 | 40 | 35 | 0 | 60 | 60 | 60 | 60 | 60 | 60 | 60 |
| | Dye B-5 | 0 | 15 | 20 | 30 | 40 | 45 | 50 | 60 | 65 | 100 | 40 | 40 | 40 | 40 | 40 | 40 | 40 |
| Sum of contents of dye A and dye B (wt%) | | 18 | 18 | 18 | 18 | 18 | 18 | 18 | 18 | 18 | 18 | 18 | 18 | 8 | 11 | 30 | 35 | 11 |
| Ethylene urea (wt%) | | 5 | 5 | 5 | 5 | 5 | 5 | 5 | 5 | 5 | 5 | - | - | 5 | 5 | 5 | 5 | 10 |
| Urea (wt%) | | - | - | - | - | - | - | - | - | - | - | 5 | - | - | - | - | - | - |
| 2-Pyrrolidone (wt%) | | - | - | - | - | - | - | - | - | - | - | - | 5 | - | - | - | - | - |
| Evaluatio n | Linearity | C | B | A | A | A | A | A | A | B | C | AA | B | A | A | AA | B | A |
| | Image sharpnes s | C | C | A | A | AA | AA | A | B | C | B | A | B | A | AA | A | A | AA |
| Note | | Comparativ e | Comparativ e | Present inventio n | Present inventio n | Present inventio n | Present inventio n | Present inventio n | Present inventio n | Comparativ e | Comparativ e | Present inventio n | Present inventio n | Present inventio n | Present inventio n | Present inventio n | Present inventio n | Present inventio n |

## Claims

1. An ink for inkjet textile printing, comprising at least water, an alkylene glycol, dye A, and dye B, wherein
the dye A and the dye B are in an isomer relationship, the dye B is more hydrophobic than the dye A, and a content molar ratio between the dye A and the dye B (dye A/dye B) is from 55/45 to 70/30, wherein
the ink comprises a solvent having a urea bond, and
a sum of contents of dye A and dye B in the ink is 11 wt% to 30 wt%.

2. The ink for inkjet textile printing according to any one of claim 1, comprising ethylene urea.

3. An inkjet textile printing method for performing textile printing by emitting the ink for inkjet textile printing according to any one of claims 1 to 2 from an inkjet head.

4. The inkjet textile printing method according to claim 3, wherein textile printing is performed by a single pass method by emitting the ink for inkjet textile printing from an inkjet head.

## Patentansprüche

1. Tinte für den Tintenstrahl-Textildruck, umfassend zumindest Wasser, ein Alkylenglykol, Farbstoff A und Farbstoff B, wobei
der Farbstoff A und der Farbstoff B in einer isomeren Beziehung stehen, der Farbstoff B hydrophober als der Farbstoff A ist und ein Molverhältnis zwischen den Gehalten an Farbstoff A und Farbstoff B (Farbstoff A/Farbstoff B) von 55/45 bis 70/30 beträgt, wobei
die Tinte ein Lösungsmittel mit einer Harnstoffbindung enthält, und
die Summe der Gehalte an Farbstoff A und Farbstoff B in der Tinte 11 Gew.-% bis 30 Gew.-% beträgt.

2. Tinte für den Tintenstrahl-Textildruck nach Anspruch 1, umfassend Ethylenharnstoff.

3. Tintenstrahl-Textildruckverfahren zur Durchführung des Textildrucks durch Ausstoßen der Tinte für den Tintenstrahl-Textildruck gemäß einem der Ansprüche 1 bis 2 aus einem Tintenstrahlkopf.

4. Tintenstrahl-Textildruckverfahren nach Anspruch 3, wobei der Textildruck in einem einzigen Durchgang durch Ausstoßen der Tinte für den Tintenstrahl-Textildruck aus einem Tintenstrahlkopf durchgeführt wird.

## Revendications

1. Encre d'impression textile à jet d'encre, comprenant au moins de l'eau, un alkylène glycol, un colorant A et un colorant B, dans laquelle
le colorant A et le colorant B sont dans une relation d'isomérie, le colorant B est plus hydrophobe que le colorant A, et un rapport molaire entre les teneurs en colorant A et en colorant B (colorant A/colorant B) est compris entre 55/45 et 70/30, dans laquelle
l'encre comprend un solvant ayant une liaison urée, et
une somme des teneurs en colorant A et en colorant B dans l'encre est comprise entre 11 % en poids et 30 % en poids

2. L'encre d'impression textile à jet d'encre selon la revendication 1 comprenant de l'éthylène urée.

3. Procédé d'impression textile à jet d'encre pour réaliser une impression textile en émettant l'encre d'impression textile à jet d'encre selon l'une des revendications 1 à 2 à partir d'une tête à jet d'encre.

4. Procédé d'impression textile à jet d'encre selon la revendication 3, dans lequel l'impression textile est réalisée par une méthode à passage unique en émettant l'encre d'impression textile à jet d'encre à partir d'une tête à jet d'encre
